# EUROPEAN PATENT APPLICATION

(11) **EP 4 671 186 A1**
(43) Date of publication of application: **31.12.2025**
(21) Application number: 24184530.4
(22) Date of filing: 26.06.2024
(51) Int. Cl.: B66C 13/46, B66C 13/48, B66C 19/00, G01F 17/00, G01S 17/89

(54) **METHOD, CONTROLLER, DETERMNATION DEVICE, AND COMPUTER PROGRAM FOR DETERMINING A POSITION OF A CONTAINER ON A CONTAINER BAY OF A CONTAINER VESSEL**

(71) Applicant: ABB Schweiz AG, 5400 Baden (CH)
(72) Inventor: MAAS, Deran, 8046 Zürich (CH); MARANÒ, Stefano, 8050 Zürich (CH); ARSENALI, Bruno, 5200 Brugg (CH); TJERNGREN, Dan, 72336 Västerås (SE); LAGERHOLM, Lars, 72227 Västerås (SE); SUNDHOLM, Niklas, 72356 Västerås (SE)
(74) Representative: Sykora & König Patentanwälte PartG mbB

(57) **Abstract**

A method for determining at least one property of a container (24) on a container bay (22) of a container vessel (20) is described. The method comprises: receiving first image data from a camera (40) mounted on a structure of a crane (30), wherein the structure of the crane (30) at least partly extends over the container bay (22) and wherein the first image data are representative of a first image showing at least an area of the container bay (22) in which the container (24) is arranged; and receiving first lidar data from a lidar device (50) mounted on a structure of the crane (30), wherein the first lidar data are representative of a first point cloud representing at least a part of the area of the container bay (22); combining the received first image data and the received first lidar data; and determining the property of the container (24) depending on the combined data.

## Description

### FIELD OF THE INVENTION

The invention relates to the field of automation of ship-to-shore cranes for stevedoring a container vessel. In particular, the invention relates to a method, a controller, a determination device, and a computer program for determining at least one property of a container on a container bay of a container vessel.

### BACKGROUND OF THE INVENTION

Container vessels for transporting containers all around the world are regularly loaded and unloaded at container terminals of harbours. The container vessels berthing at a quay of the harbour at one of the terminals may be stevedored by cranes, in particular Ship-to-shore (STS) cranes. These cranes and their operation efficiency determine the speed of operation for the whole terminal and the efficiency of STS cranes is extremely important for the profitability of the whole terminal. Nowadays, STS cranes, in short "cranes" in the following, are already partly automated and can be remotely operated from a centralized control room of the terminal. The remote operation contributes to a very safe and healthy working environment for crane operators at a very high productivity. In particular, the cranes can be operated faster with shorter cycle times.

A manual interaction of the operators that is still needed today is over the container vessel, because the large variety of different container vessels and container types make an autonomous operation challenging. In addition, the container vessel may slowly move when berthing at the quay, which requires to update the information over time. To increasingly automate crane operations over the container vessel, detailed information about a container bay of the container vessel is needed and available cargo information is not reliable and/or sufficient for the autonomous operation of the crane.

### DESCRIPTION OF THE INVENTION

It is an objective of the present invention to provide a method, a controller, a determination device, and a computer program for determining at least one property of a container on a container bay of a container vessel, which contribute to a high speed and high efficiency of the crane and/or of a container terminal at which the crane is arranged, and in particular to an autonomous operation of the crane.

This objective is achieved by the subject-matter of the independent claims. Further exemplary embodiments are evident from the dependent claims and the following description.

A first aspect relates to a method for determining at least one property of a container on a container bay of a container vessel. The method comprises: receiving first image data from a camera mounted on a structure of a crane, wherein the structure of the crane at least partly extends over the container bay and wherein the first image data are representative of a first image showing at least an area of the container bay in which the container is arranged; and receiving first lidar data from a lidar device mounted on a structure of the crane, wherein the first lidar data are representative of a first point cloud representing at least a part of the area of the container bay; combining the received first image data and the received first lidar data; and determining the property of the container depending on the combined data. The structure of the crane at which the camera is arranged may be the same structure of the crane as or another structure of the crane than that one at which the lidar device is arranged.

A second aspect relates to a controller for determining the at least one property of the container on the container bay of the container vessel. The controller may be configured to carry out the method as described above and in the following. The controller comprises: a memory configured for storing the image data, the lidar data, the combined data, and/or position data being representative of a position of the camera mounted on the corresponding structure of the crane and/or of a position of the lidar device mounted on the corresponding structure of the crane, wherein the structure of the crane at least partly extends over the container bay; and a processor which is configured for carrying out the method as described above and in the following.

A third aspect relates to a determination device for determining the at least one property of the container on the container bay of the container vessel. The determination device comprises: the controller as described above and in the following; the camera mounted on the corresponding structure of the crane, wherein the structure of the crane at which the camera is arranged at least partly extends over the container; and the lidar device mounted on the corresponding structure of the crane, wherein the structure of the crane at which the lidar device is arranged at least partly extends over the container.

A fourth aspect relates to a computer program for determining the at least one property of the container on the container bay of the container vessel. The computer program comprises computer-readable instructions which, when being executed by the processor of the controller as described above and in the following, carry out the method as described above and in the following. The computer program may be stored on a computer-readable medium. The computer-readable medium may be a floppy disk, a hard disk, an USB storage device, a RAM, a ROM, an EPROM or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

Determining the property of the container depending on the combined data comprising the received first image data and the received first lidar data may enable to receive important information about the container which are needed to completely automate an operation of the crane over the container vessel. In particular, a position, size, and/or type of the container, and optionally the presence of other objects, e.g., hatch covers and walkways, may be important information for operating the crane autonomously. So, the property of the container may refer to the position, size, type, and/or orientation of the container. The autonomous operation of the crane may contribute to a high speed and high efficiency of the crane and/or of a container terminal at which the crane is arranged. Therefore, the above aspects may contribute to the high speed and high efficiency of the crane and/or of the container terminal at which the crane is arranged.

The container vessel may berth at a quay. The container vessel may be oriented to the quay such that a longitudinal extension of the container vessel is parallel to a rim of the quay at the water body on which the container vessel swims. The crane may be a ship-to-shore crane or a container crane as they are known in the art. The structure of the crane to which the camera and/or the lidar device are mounted may be the boom, the trolley, or the spreader of the crane. The crane, in particular the support may be movable along the quay in parallel to a longitudinal extension of the container vessel and/or in parallel to a quay wall of the quay. For example, the quay may comprise a railway structure which guides the support during its movement. The boom may be mechanically coupled to the support. The boom may extend perpendicular to the longitudinal extension of the container vessel. The boom may be fixedly coupled to the support such that the boom may be moved together with the support. The trolley may be arranged at the boom. The trolley may be moved along the boom in a direction perpendicular to the longitudinal extension of the container vessel. The spreader may be coupled to the trolley by one or more suspension elements such that the trolley holds the spreader via the suspension elements. Each suspension element may be or may comprise a rope or cable, e.g. a steel rope or steel cable. The spreader may be lifted or lowered with respect to the container vessel by moving the suspension elements accordingly.

The combined data may be a dataset or a file which comprises the information contained in the image data and the information contained in the lidar data. In the simplest case, the combined data consist of the image data and the lidar data.

The image data may be used to determine the property of the container in a plane parallel to an image plane of the camera and as such in two dimensions. The lidar data may be used to determine depth information about the property of the container, wherein the depth information may provide information about the property of the container in a third dimension. So, the combined data may represent three-dimensional information with respect to the property of the container.

In addition to the property of the container, one or more further information may be determined from the combined data. For example, positions and/or numbers of one or more walkways, people, and/or hatch covers may be determined from the combined data.

Before carrying out the method, the camera and/or the lidar device may be calibrated. In particular, it is advantageous to know the position of the camera and/or, respectively, the lidar device on the corresponding structure in a crane coordinate system of the crane very accurately. The calibration may be done in a couple of steps. For example, the trolley may be moved to obtain two different rotation angles. A third rotation angle may be obtained by observing a known structure of the crane, e.g. a lashing platform of the crane. A location of the lidar device at the corresponding structure may be obtained by capturing a reference point cloud from a reference container on the container bay, wherein a reference position of the reference container may be known in advance.

According to an embodiment, the method comprises: determining a camera position of the camera at the time when the first image was captured; determining a first lidar position of the lidar device at the time when the first point cloud was captured; and determining the property of the container depending on the first camera position and the first lidar position. This enables to determine the property of the container with respect to the first positions of the camera and the lidar device. The position of the camera and the position of the lidar device on the corresponding structure may be known in advance, e.g. because of the calibration, and may be stored on a memory of the controller for carrying out the method. The position of the corresponding structure may be determined by reading out the position of the corresponding structure from a memory of a controller of the crane or by receiving the position of the corresponding structure from the controller of the crane. In the former case, the controller of the crane may be the controller carrying out the method. Then, the first camera position and the first lidar position may be determined depending on the positions of the camera and the lidar device on the corresponding structure and depending on the position(s) of the corresponding structure(s). The first camera position and the first lidar position may be determined before or after receiving the image data and/or the lidar data as long as the determined first positions are that positions of the camera and the lidar device from which the first image has been taken and, respectively, from which the first point cloud was captured.

According to an embodiment, the method comprises: before receiving the first image data, sending a first image capturing signal to the camera, wherein the first image capturing signal and the camera are configured such that the camera captures the first image and generates the first image data upon receiving the first image capturing signal; and/or before receiving the first lidar data, sending a first lidar capturing signal to the lidar device, wherein the first lidar capturing signal and the lidar device are configured such that the lidar device captures the first point cloud and generates the first lidar data upon receiving the first lidar capturing signal. Sending the first image capturing signal to the camera may correspond to an initiation of the method for determining the property of the container, e.g., by the controller, and thereby may contribute to automate the operation of the crane. For example, when initiating the method for determining the property of the container, the first capturing signals may be sent to the camera and, respectively, the lidar device automatically.

The first image capturing signal and the first lidar capturing signal may be combined in one single first capturing signal. This first capturing signal may be sent to the camera and the lidar device, e.g., simultaneously, and the camera and the lidar device may be configured to capture the first image and, respectively, the first point cloud upon receiving the first capturing signal.

According to an embodiment, the method comprises: after the camera captured the first image, sending a camera movement signal to the crane such that the crane moves the structure at which the camera is arranged with respect to the container vessel, sending a second camera capturing signal to the camera, wherein the camera and the second camera capturing signal are configured such that the camera captures a second image and generates corresponding second image data upon receiving the second camera capturing signal while the crane is moving the structure at which the camera is arranged or after the crane has moved the structure at which the camera is arranged, receiving the second image data, combining the second image data with the first image data and the first lidar data, and determining the property of the container depending on the combined data; and/or after the lidar device captured the first point cloud, sending a lidar movement signal to the crane such that the crane moves the structure at which the lidar device is arranged with respect to the container vessel, sending a second lidar capturing signal to the lidar device, wherein the lidar device and the second lidar capturing signal are configured such that the lidar device captures a second point cloud and generates corresponding second lidar data upon receiving the second lidar capturing signal while the crane is moving the structure at which the lidar device is arranged or after the crane has moved the structure at which the lidar device is arranged, receiving the second lidar data, combining the second lidar data with the first image data and the first lidar data, and determining the property of the container depending on the combined data. When the second image data and the second lidar data are received, these data may be combined with each other and with the first image and lidar data.

For example, upon receiving the camera movement signal, the crane may be moved such that the camera is moved from the first camera position to a second camera position, wherein the first and second camera positions may be chosen such that the field of view of the camera in the first camera position overlaps the field of view of the camera in the second camera position. Alternatively or additionally, upon receiving the lidar movement signal, the crane may be moved such that the lidar device is moved from the first lidar position to a second lidar position, wherein the first and second lidar positions may be chosen such that the field of view of the lidar device in the first lidar position overlaps the field of view of the lidar device in the second lidar position. When the camera and the lidar device are arranged at the same structure of the crane, the camera movement signal and the lidar movement signal may be the same signal and one of these movement signals may be omitted, because the lidar device is moved automatically when the camera is moved. As another alternative, the crane, in particular the structure of the crane, may be moved independent from the determination of the property, in particular for another reason than for determining the property, e.g., for bringing the structure in a position from which one of the containers of the container may be grabbed by the crane or may be positioned on the container bay. Then, profiting from this movement, the second image and/or the second point cloud may be captured without the need for moving the structure separately and therefore without the need for a corresponding movement signal. So, the property may be determined during a normal operation of the crane without the need for any extra movement of the crane. As a further alternative, the crane may be configured such that it moves automatically after capturing the first image and lidar data such that a dedicated movement signal is not necessary for bringing the camera and the lidar device to their second positions. As another alternative, the camera and/or the lidar device may be configured for capturing the second and in case further images and/or, respectively, the second and in case further point clouds automatically, when the position of the camera and/or, respectively, of the lidar device are changed. In this case, the second capturing signals and in case any further capturing signals may be omitted.

When the second image data and the second lidar data are generated and received, the second image data and the second lidar data may be combined with the first image data and the first lidar data to achieve the combined data from which the property of the container may be determined. For example, the first and second image data may be combined by merging the first and second image data, and the first and second lidar data may be combined by merging the first and second lidar data. Then, the merged image data and the merged lidar data may be combined to achieve the combined data from which the property of the container may be determined. Alternatively, the first image data and the first lidar data may be merged and combined as first data, and the second image data and the second lidar data may be merged and combined as second data. Then, the first data and the second data may be combined to achieve the combined data from which the property of the container may be determined.

When the camera and/or the lidar device are arranged at the trolley, an angular resolution of the lidar device may be low in the trolley direction, i.e., perpendicular to the longitudinal direction of the container vessel, and the angular resolution may be high in the gantry direction, i.e., parallel to the longitudinal direction of the container vessel. For example, the angular resolution of the lidar device in the trolley direction may be in a range from 0 to 1024 measurements per 360 degree, e.g., from 600 to 1024 measurements per 360 degree. Alternatively or additionally, the angular resolution of the lidar device in the gantry direction may be in a range from 1024 to 4096 measurements per 360 degree, e.g., from 1920 to 4096 measurements per 360 degree. As a result of the moving structure and the merging of the data, the resolution will increase in the direction in which the structure has been moved.

Optionally, the structure(s) and thereby the camera and the lidar device may be moved continuously and/or several times, wherein several images and several point clouds may be captured during these movements. In fact, the camera may capture a video, eventually while the structure is moving, with the video comprising the first image data, in case the second image data, and an amount of further image data representing the video. In a similar way, the lidar device may generate an amount lidar data including the first lidar data, in case the second lidar data, and an amount of further lidar data, with each lidar dataset representing a corresponding point cloud. The corresponding image data and the corresponding lidar data may be combined in order to determine the property very accurately.

According to an embodiment, the method comprises: determining a second camera position of the camera at the time when the second image was captured, wherein the second image data are combined with the first image data based on the first and second camera positions; and/or determining a second lidar position of the lidar device at the time when the second point cloud was captured, wherein the second lidar data are combined with the first lidar data based on the first and second lidar positions.

According to an embodiment, the second image data are combined with the first image data by using a process out of a group of processes, the group comprising Iterative Closest Points (ICP), Simultaneous Localization And Mapping (SLAM), Structure-from-Motion, keypoint-based 3D reconstruction techniques, and ML based 3D reconstruction techniques; and/or the second lidar data are combined with the first lidar data by using iterative closest points and/or by using simultaneous localization and mapping. When combining the first lidar data and the second lidar data the current crane state may be considered and the data may be combined based on the crane state. The process "Iterative Closest Points" is well known in the art and described in detail in "Generalized-ICP", by Segal, Aleksandr & Hahnel, Dirk & Thrun, Sebastian, (2009), Proc. of Robotics: Science and Systems. 10.15607/RSS.2009.V.021. The process "Structure-from-Motion" is well known in the art and described in detail in "Structure-from-Motion Revisited", by Johannes L. Schönberger and Jan-Michael Frahm, University of North Carolina at Chapel Hill, Eidgenössische Technische Hochschule Zürich, 2016 IEEE Conference on Computer Vision and Pattern Recognition, DOI 10.1109/CVPR.2016.445, page 4104 to page 4113. The SLAM-process is well known in the art and described in detail in "A survey of state-of-the-art on visual SLAM", by Iman Abaspur Kazerouni, Luke Fitzgerald, Gerard Dooly, and Daniel Toal, Expert Systems With Applications 205 (2022) 117734. The keypoint-based 3D reconstruction techniques are also well known in the art and described in "Structure-from-Motion Revisited", J. L. Schönberger and J. -M. Frahm, 2016 IEEE Conference on Computer Vision and Pattern Recognition (CVPR), Las Vegas, NV, USA, 2016, pp. 4104-4113, doi: 10.1109/CVPR.2016.445. The ML based 3D reconstruction techniques are also well known in the art and described in "Pyramid Stereo Matching Network", by J. -R. Chang and Y. -S. Chen, 2018 IEEE/CVF Conference on Computer Vision and Pattern Recognition, Salt Lake City, UT, USA, 2018, pp. 5410-5418, doi: 10.1109/CVPR.2018.00567.

According to an embodiment, after combining the image data and the lidar data and before determining the position of the container depending on the combined data, the method comprises: determining a map of the container bay from the combined data, wherein the map comprises a digital representation of the area of the container bay, wherein the property of the container is determined depending on the combined data by determining the property of the container from the map.

The map may be a three-dimensional map of the container bay. The map may be obtained from the image data by photogrammetry techniques, e.g., as described in "Structure-from-Motion Revisited" by J. L. a. J.-M. F. Schonberger, in IEEE conference on computer vision and pattern recognition, 2016. In particular, from each captured image, feature points may be detected, the feature points may be matched across two or more of the images, an optimization problem is formulated to capture all the constraints provided by the matched feature points and, if available, from the position of the crane, in particular of the structure of the crane. Then, the optimization problem may provide a three-dimensional position of each feature point in a suitable coordinate system, e.g. the real-world coordinate system, e.g., the world coordinate system, the vessel coordinate system, or the crane coordinate system. The resulting map may consist of a list of points with their three-dimensional position within the coordinate system. The map may be given or described by a point cloud comprising the feature points. The more images and the more point clouds are taken, the more accurate the map may be. Optionally, each feature point in the map may be provided with a colour attribute. For example, the point clouds may be mapped to the corresponding images and colours may be assigned to the points of the point cloud, wherein the points of the point cloud get the colours of the pixels of the corresponding image which are closest to the corresponding points. The coloured points of the point cloud may help to differentiate objects, in particular containers, from each other during the object detection.

According to an embodiment, the property of the container is at least one property out of a group of properties, the group of properties comprising a position of the container on the container bay, a type of the container, a size of the container, and an orientation of the container. The property may also comprise two or more properties of the group of properties. For example, the property to be determined from the combined data may be the position and the type of the container. The size of the container in one dimension may be 20ft, 40ft, or 45ft, for example. The type of the container may be "normal", e.g., cuboid, "tank", etc. The position of the container may be given in coordinates within a coordinate system. The coordinates may be real-world coordinates and the coordinate system may be a real-world-coordinate system. In case of the world coordinate system, the corresponding world coordinates may be given in terms of longitude and latitude. Alternatively, the coordinate system may be a local coordinate system, wherein the corresponding coordinates may be referred to as local coordinates. The local coordinate system may be a vessel coordinate system of the container vessel, a terminal coordinate system of the terminal, or a crane coordinate system of the crane.

According to an embodiment, the camera and the lidar device are arranged such that a camera field of view of the camera at least partly overlaps a lidar field of view of the lidar device. In other words, the first image shows at least a part of the container bay which is represented by the first point cloud. Alternatively or additionally, the second image shows at least a part of the container bay which is represented by the second point cloud. Alternatively or additionally, the first image shows at least a part of the container bay which is represented by the second point cloud, and/or the second image shows at least a part of the container bay which is represented by the first point cloud. For example, an overlap between the camera field of view and the lidar field of view may be as big as possible. This may contribute to determine an accurate and continuous map of the container bay.

According to an embodiment, a further camera and/or a further lidar device are arranged at a structure of the crane and the method comprises: receiving further image data from the further camera and combining the further image data with the other image data; and/or receiving further lidar data from the further lidar device and combining the further lidar data with the other lidar data; and determining the position of the container depending on these combined data. Receiving the further image data and/or the further lidar data and combining the further image data and/or, respectively, the further lidar data and combining the corresponding further data with the other data may contribute to determine the property of the container very accurately. Additionally, in case of the map being determined based on the image and lidar data, this may contribute to determine the map very accurately. The other image data may be the first and/or second image data. The other lidar data may the first and/or second lidar data.

According to an embodiment, the property is determined from the combined data by a machine learning algorithm. The machine learning algorithm may be referred to as perception algorithm. The machine learning algorithm may be trained to determine the property of the containers from combined image and lidar data, for example by supervised learning. In particular, the machine learning algorithm may be trained to classify, localize, and/or identify the property of the container in the corresponding from the combined data including the image data and the lidar data. Alternatively, non-machine-learning methods may be used to classify and localize the property of the container.

The machine learning algorithm may be trained by an amount of combined data, in particular by an amount of datasets each comprising combined data including image data and lidar data, with the datasets being generated from different container vessels and container bays, for example. Each of the datasets, i.e. the combined data, comprises image data of an amount of images of the corresponding container bay and lidar data of an amount of point clouds of the corresponding container being labelled and the labelled combined data may be used to train the machine learning algorithm. The machine learning algorithm may perform object detection and/or instance segmentation for determining the property of the container from the combined data. In case of the object detection, the machine learning algorithm may be or may comprise an object detection algorithm which may determine a bounding box for each container detected in the combined data. The determined bounding box provides information about the position of the container and optionally of an orientation and/or a type of the container. A corresponding process is well known in the art and described in "Learning Object Bounding Boxes for 3D Instance Segmentation on Point Clouds", by Bo Yang, Jianan Wang, Ronald Clark, Qingyong Hu, Sen Wang, Andrew Markham, and Niki Trigoni, University of Oxford, DeepMind, Imperial College London, Heriot-Watt University, 33rd Conference on Neural Information Processing Systems (NeurIPS 2019), Vancouver, Canada. Further machine learning based object detection for classifying and/or localizing objects in 3D point clouds may be for example: PointRCNN, PointPillars, Voxel R-CNN, PV-RCNN and PV-RCNN++. "PointRCNN" is described in "3D object proposal generation and detection from point cloud", by Shi, S., Wang, X., & Li, H. (2019), Proceedings of the IEEE Computer Society Conference on Computer Vision and Pattern Recognition, 2019-June, 770-779, https://doi.org/10.1109/CVPR.2019.00086. "PointPillars" is described in "Fast Encoders for Object Detection from Point Clouds", by Lang, A. H., Vora, S., Caesar, H., Zhou, L., Yang, J., & Beijbom, O. (2019), https://github.com/nutonomy/second.pytorch. "Voxel R-CNN" is described in "Towards High Performance Voxel-based 3D Object Detection", by Deng, Jiajun & Shi, Shaoshuai & Li, Peiwei & Zhou, Wengang & Zhang, Yanyong & Li, Houqiang, (2021), Proceedings of the AAAI Conference on Artificial Intelligence, 35. 1201-1209. 10.1609/aaai.v35i2.16207. "PV-RCNN++" is described in "Point-Voxel Feature Set Abstraction With Local Vector Representation for 3D Object Detection", by Shi, S., Jiang, L., Deng, J., Wang, Z., Guo, C., Shi, J., Wang, X., & Li, H. (2023), International Journal of Computer Vision, 131(2), 531-551, https://doi.org/10.1007/s11263-022-01710-9.

In case of the instance segmentation, the machine learning algorithm may be or may comprise an instance segmentation algorithm which may determine sets of feature points belonging to each container instance and points belonging to other objects. Subsequent processing allows to determine, e.g., estimate, the position and optionally the other information with respect to the container. Possible machine learning algorithms which may be used to detect containers from images are described in the paper "Pv-rcnn: Point-voxel feature set abstraction for 3d object detection" by S. e. a. Shi, in IEEE/CVF conference on computer vision and pattern recognition, 2020; and in the paper "Learning object bounding boxes for 3D instance segmentation on point clouds" by B. e. a. Yang, advances in neural information processing systems, vol. 32, 2019.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a side view of a crane and a cross-sectional view of a container vessel, according to an embodiment of the present invention.
Fig. 2 shows a side view of a crane and a cross-sectional view of a container vessel, according to an embodiment of the present invention.
Fig. 3 shows a perspective view of a map of a container bay of a container vessel, according to an embodiment of the present invention.
Fig. 4 shows an output of a controller for determining at least one property of a container on a container bay of a container vessel, according to an embodiment of the present invention.
Fig. 5 shows a flow-chart of a method for determining at least one property of a container on a container bay of a container vessel, according to an embodiment of the present invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

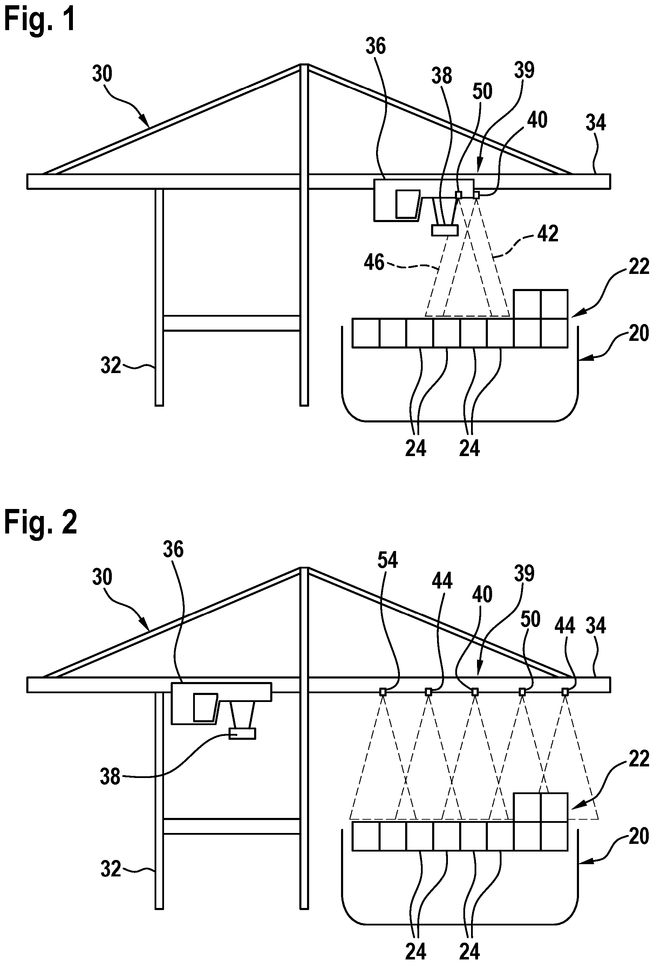

Fig. 1 shows a side view of a crane 30 and a cross-sectional view of a container vessel 20, according to an embodiment of the present invention. The container vessel 20 may berth at a quay of a harbour. The container vessel 20 may be oriented to the quay such that a longitudinal extension, perpendicular to the cross-section shown in figure 1, of the container vessel 20 is parallel to a rim of the quay at the water body on which the container vessel 20 swims. The container vessel 20 has a container bay 22 on which several containers 24 are arranged. In other words, the containers 24 are arranged in an area of the container bay 22.

The crane 30 may be a ship-to-shore crane, in other words a container crane, as they are known in the art. The crane 30 may comprise a support 32, a boom 34, a trolley 36, and optionally a spreader 38 of the crane 30. A "structure" of the crane 30 within the sense of the present description may be the support 32, the boom 34, the trolley 36, or the spreader 38 of the crane 30. The crane 30, in particular the support 32 may be movable along the quay in parallel to the longitudinal extension of the container vessel 20 and/or in parallel to a quay wall of the quay. For example, the quay may comprise a railway structure which guides the support 32 during its movement along the quay.

The boom 34 may be mechanically coupled to the support 32. The boom 34 may extend perpendicular to the longitudinal extension of the container vessel 20. The boom 34 may extend at least in part over the container bay 22. The boom 34 may be fixedly coupled to the support 32 such that the boom 34 may be moved together with the support 32.

The trolley 36 may be arranged at the boom 34. The trolley 36 may be moved along the boom 34 in a direction perpendicular to the longitudinal extension of the container vessel 20. The spreader 38 may be coupled to the trolley 34 by one or more suspension elements such that the trolley 34 holds the spreader 38 via the suspension elements. Each suspension element may be or may comprise a rope or cable, e.g. a steel rope or steel cable. The spreader 38 may be lifted or lowered with respect to the container vessel 20 by moving the suspension elements accordingly.

At least a part of a determination device 39 is arranged at the crane 30. The determination device 39 comprises at least one camera, e.g., a camera 40, and at least one lidar device, e.g., a lidar device 50.

The camera 40 is mounted at one of the above-mentioned structures of the crane 30 which at least partly extends over the container bay 22, for example at the trolley 36. The camera 40 has a camera field of view 42. The camera 40 is arranged such that at least some of the containers 24 are arranged within the camera field of view 42. The camera 40 and any other camera mentioned in the following may be a mono camera having one optical channel only or a stereo camera having two optical channels, e.g., a first channel and a second channel.

The lidar device 50 is also mounted at one of the above-mentioned structures of the crane 30. The lidar device 50 may be arranged at the same structure of the crane 30 at which the camera 40 is arranged, e.g., at the trolley 36, as shown in figures 1 and 2, or at another one of the above-mentioned structures of the crane 30. The lidar device 50 has a lidar field of view 52. The lidar device 50 may be arranged such that the lidar field of view 52 covers at least a part of the container bay 22. The camera 40 and the lidar device 50 may be arranged such that the camera field of view 42 of the camera 40 at least partly overlaps the lidar field of view 52 of the lidar device 50. Preferably, an overlap between the camera field of view 42 and the lidar field of view 52 may be maximized by arranging the camera 40 and the lidar device 50 accordingly.

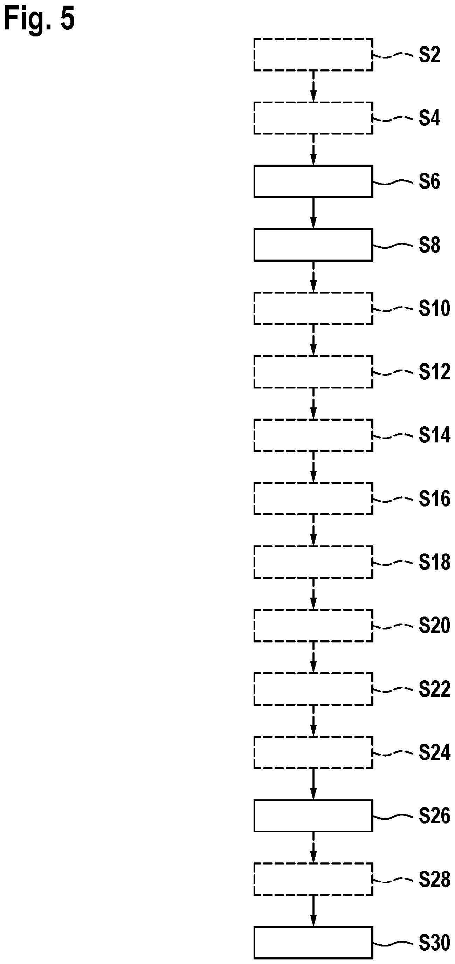

The determination device 39 may further comprise a controller (not shown) communicatively coupled to the camera 40, to the lidar device 50, and optionally to the crane 30. The controller may comprise a memory and a processor (not shown) coupled to the memory. The controller may be arranged at or in the crane 30, in a harbour building in which a control room for controlling the crane 30 is arranged, or in a remote server, for example. When the controller is arranged at or in the crane 30, the controller may be configured to control one or more functions of the crane 30, e.g., a movement of the crane 30, in particular a movement of one or more of the structures of the crane 30. A function of the determination device 39 and in particular of the controller is explained in more detail with respect to figure 5 below.

Fig. 2 shows a side view of a crane, e.g., the crane 30, and a cross-sectional view of a container vessel, e.g., the container vessel 20, according to an embodiment of the present invention. The container vessel 20 shown in figure 2 may be identical to the container vessel 20 described with respect to figure 1. The crane 30 shown in figure 2 may widely correspond to the crane described with respect to figure 1. Therefore, only those features are described in the following, in which the crane 30 shown in figure 2 differs from the crane described with respect to figure 1, in order to provide a concise description of the invention and to avoid unnecessary repetitions.

The determination device 39 may comprise one, two or more further cameras 44 mounted on the structure of the crane 30. The further cameras 44 may be arranged at the same structure of the crane 30 at which the camera 40 is arranged. Alternatively, one or more of the further cameras 44 may be arranged at another one of the structures of the crane 30. The further cameras 44 each have a further camera field of view (not explicitly referenced in the figures). The further cameras 44 may be arranged such that each of the camera field of views covers at least a part of the container bay 22. For example, the cameras 40, 44 may be arranged such that their camera field of views 42 overlap each other, e.g., such that the whole width of the container vessel 20 is continuously covered by the camera field of views of the cameras 40, 44, 48.

Additionally, the determination device 39 may comprise one, two or more further lidar devices 54 mounted on the structure of the crane 30. The further lidar devices 54 may be arranged at the same structure of the crane 30 at which the lidar device 50 is arranged. Alternatively, one or more of the further lidar devices 54 may be arranged at another one of the structures of the crane 30. The further lidar devices 54 each have a further lidar field of view (not explicitly referenced in the figures). The further lidar devices 54 may be arranged such that each of the lidar field of views covers at least a part of the container bay 22. For example, the lidar devices 50, 54 may be arranged such that their lidar field of views 42 overlap each other, e.g., such that the whole width of the container vessel 20 is continuously covered by the lidar field of views of the lidar devices 50, 54.

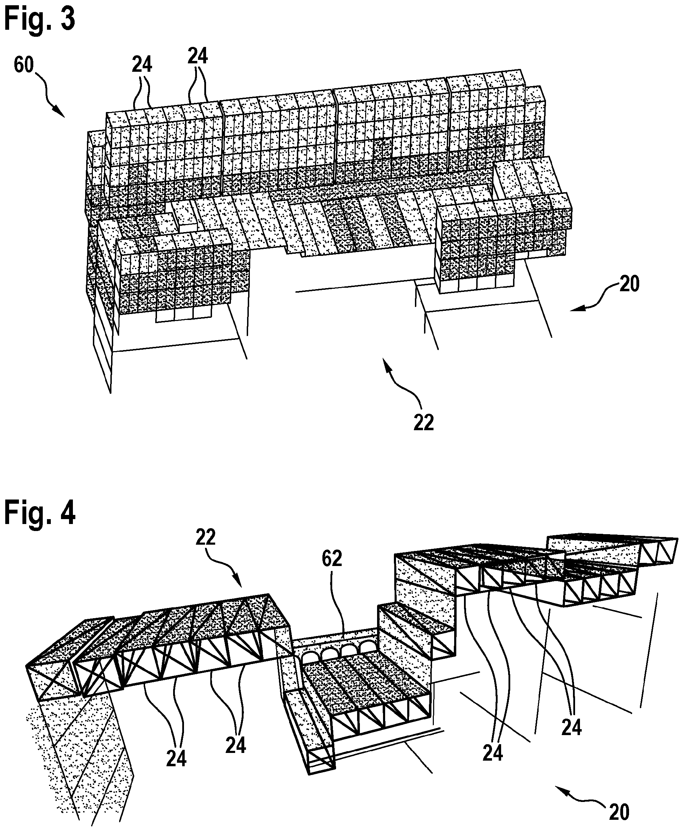

Fig. 3 shows a perspective view of a map 60 of a container bay of a container vessel, e.g., of the container bay 22 of the container vessel 20 shown in figures 1 or 2, according to an embodiment of the present invention. The map 60 may be obtained from merging individual lidar scans, in particular by merging the first, second, and in case further lidar data. One simple approach to create the map 60 is by using positional information from the crane 30, in particular regarding the structure at which the lidar device(s) 50, 54 is/are arranged, e.g., regarding a position of the trolley 36 with respect to the embodiment shown in figure 1 and regarding a position of the boom 34 with respect to the embodiment shown in figure 2. From the position of the trolley 36 or, respectively, the position of the boom 34, the position of the lidar device(s) 50, 54 may be known for every lidar scan, in other words for all of the lidar data. By merging the corresponding point clouds from the lidar scans the map 60 as shown in figure 3 may be obtained.

Fig. 4 shows an output of a controller for determining at least one property of a container on a container bay of a container vessel, e.g., of the container 24 on the container bay 22 of the container vessel 20, according to an embodiment of the present invention. The output may be referred to as "perception output". To create the output shown in figure 4, the map 60 may be used as an input for the controller, with the controller carrying out a machine learning algorithm to generate 3D boxes for each of the containers 24, e.g. by PV-RCNN mentioned above. Optionally, one or more further objects on the container bay 22 may be detected by the corresponding machine learning algorithm, e.g., a walkway 62.

Fig. 5 shows a flow-chart of a method for determining at least one property of a container on a container bay of a container vessel, e.g., of the container 24 on the container bay 22 of the container vessel 20, according to an embodiment of the present invention. The method may be carried out by the controller for determining the property of the container 24 on the container bay 22 of the container vessel 20, as described above with respect to figures 1 or 2. When carrying out the method the map 60 and/or the perception output shown in figure 4 may be created.

In an optional step S2, a first image capturing signal may be sent to the camera 40. The first image capturing signal and the camera 40 may be configured such that the camera 40 captures a first image and generates first image data upon receiving the first image capturing signal. The first image data are representative of the first image. The first image shows at least an area of the container bay 22 in which the container 24 is arranged.

In an optional step S4, a first lidar capturing signal may be sent to the lidar device 50. The first lidar capturing signal and the lidar device 50 may be configured such that the lidar device 50 captures a first point cloud and generates first lidar data upon receiving the first lidar capturing signal. The first lidar data are representative of the first point cloud. The first point cloud represents at least a part of the area of the container bay 22.

In a step S6, the first image data from the camera 40 may be received by the controller.

In a step S8, the first lidar data from the lidar device 50 may be received by the controller.

In an optional step S10, a camera position of the camera 40 at the time when the first image was captured may be determined, e.g., based on the position of the structure at which the camera 40 is arranged at the time when the first image was captured. The position of the structure at which the camera 40 is arranged at the time when the first image was captured may be retrieved from the controller of the crane 30.

In an optional step S12, a first lidar position of the lidar device 50 at the time when the first point cloud was captured may be determined, e.g., based on the position of the structure at which the lidar device 50 is arranged at the time when the first point cloud was captured. The position of the structure at which the lidar device 50 is arranged at the time when the first point cloud was captured may be retrieved from the controller of the crane 30.

In an optional step S14, a camera movement signal may be sent to the crane 30 such that the crane 30 moves the structure at which the camera 40 is arranged with respect to the container vessel 20.

In an optional step S 16, a lidar movement signal may be sent to the crane 30 such that the crane 30 moves the structure at which the lidar device 50 is arranged with respect to the container vessel 20.

In an optional step S 18, a second camera capturing signal may be sent to the camera 40. The camera 40 and the second camera capturing signal may be configured such that the camera 40 captures a second image and generates corresponding second image data upon receiving the second camera capturing signal while the crane 30 is moving the structure at which the camera 40 is arranged or after the crane 40 has moved the structure at which the camera 40 is arranged.

In an optional step S20, a second lidar capturing signal may be sent to the lidar device 50, wherein the lidar device 50 and the second lidar capturing signal are configured such that the lidar device 50 captures a second point cloud and generates corresponding second lidar data upon receiving the second lidar capturing signal while the crane 30 is moving the structure at which the lidar device 50 is arranged or after the crane 30 has moved the structure at which the lidar device 50 is arranged.

In an optional step S22, which may be carried out when the step S18 has been carried out, the second image data may be received, in particular by the controller carrying out the method.

In an optional step S24, which may be carried out when the step S20 has been carried out, the second lidar data may be received, in particular by the controller carrying out the method.

In a step S26, the image data, in particular the first image data and in case the second image data, and lidar data, in particular the first lidar data and in case the second lidar data, may be combined by merging the corresponding data.

In an optional step S28, the map 60 may be generated, e.g., by the controller carrying out the method, as described above, in particular with respect to figure 3.

In a step S30, the property of the container 24 may be determined depending on the combined data, in particular the combined image and lidar data. When step S28 has been carried out, the property of the container 24 may be determined depending on the map 60. In any case, the property of the container 24 may be determined depending on the combined data by a correspondingly trained machine learning algorithm as described above.

A computer program for determining the at least one property of the container 24 on the container bay 22 of the container vessel 24 may comprise computer-readable instructions which, when being executed by the processor of the controller as described above, carry out the method as described above. The computer program may be stored on a computer-readable medium. The computer-readable medium may be a floppy disk, a hard disk, an USB storage device, a RAM, a ROM, an EPROM or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

| | |
|---|---|
| Container vessel | 20 |
| Container bay | 22 |
| Container | 24 |
| Crane | 30 |
| Support | 32 |
| Boom | 34 |
| Trolley | 36 |
| Spreader | 38 |
| Determination device | 39 |
| Camera | 40 |
| Camera field of view | 42 |
| Further camera | 44 |
| Lidar device | 50 |
| Lidar field of view | 52 |
| Further lidar device | 54 |
| Map | 60 |
| Walkway | 62 |

## Claims

1. A method for determining at least one property of a container (24) on a container bay (22) of a container vessel (20), the method comprising:
receiving first image data from a camera (40) mounted on a structure of a crane (30), wherein the structure of the crane (30) at least partly extends over the container bay (22) and wherein the first image data are representative of a first image showing at least an area of the container bay (22) in which the container (24) is arranged; and
receiving first lidar data from a lidar device (50) mounted on a structure of the crane (30), wherein the first lidar data are representative of a first point cloud representing at least a part of the area of the container bay (22);
combining the received first image data and the received first lidar data; and
determining the property of the container (24) depending on the combined data.

2. The method according to claim 1, comprising:
determining a first camera position of the camera (40) at the time when the first image was captured;
determining a first lidar position of the lidar device (50) at the time when the first point cloud was captured; and
determining the property of the container (24) depending on the first camera position and depending on the first lidar position.

3. The method according to claim 2, comprising:
before receiving the first image data, sending a first image capturing signal to the camera (40), wherein the first image capturing signal and the camera (40) are configured such that the camera (40) captures the first image and generates the first image data upon receiving the first image capturing signal; and/or
before receiving the first lidar data, sending a first lidar capturing signal to the lidar device (50), wherein the first lidar capturing signal and the lidar device (50) are configured such that the lidar device (50) captures the first point cloud and generates the first lidar data upon receiving the first lidar capturing signal.

4. The method according to claim 3, comprising:
after the camera (40) captured the first image, sending a camera movement signal to the crane (30) such that the crane (30) moves the structure at which the camera (40) is arranged with respect to the container vessel (20), sending a second camera capturing signal to the camera (40), wherein the camera (40) and the second camera capturing signal are configured such that the camera (40) captures a second image and generates corresponding second image data upon receiving the second camera capturing signal while the crane (30) is moving the structure at which the camera (40) is arranged or after the crane (30) has moved the structure at which the camera (40) is arranged, receiving the second image data, combining the second image data with the first image data and the first lidar data, and determining the property of the container (24) depending on the combined data; and/or
after the lidar device (50) captured the first point cloud, sending a lidar movement signal to the crane (30) such that the crane (30) moves the structure at which the lidar device (50) is arranged with respect to the container vessel (20), sending a second lidar capturing signal to the lidar device (50), wherein the lidar device (50) and the second lidar capturing signal are configured such that the lidar device (50) captures a second point cloud and generates corresponding second lidar data upon receiving the second lidar capturing signal while the crane (30) is moving the structure at which the lidar device (50) is arranged or after the crane (30) has moved the structure at which the lidar device (50) is arranged, receiving the second lidar data, combining the second lidar data with the first image data and the first lidar data, and determining the property of the container (24) depending on the combined data.

5. The method according to claim 4, comprising:
determining a second camera position of the camera (40) at the time when the second image was captured, wherein the second image data are combined with the first image data based on the first and second camera positions; and/or
determining a second lidar position of the lidar device (50) at the time when the second point cloud was captured, wherein the second lidar data are combined with the first lidar data based on the first and second lidar positions.

6. The method according to one of claims 4 or 5, wherein
the second image data are combined with the first image data by using a process out of a group of processes, the group comprising iterative closest points, simultaneous localization and mapping, structure from motion, keypoint-based 3D reconstruction techniques, and ML based 3D reconstruction techniques; and/or
the second lidar data are combined with the first lidar data by using iterative closest points and/or by using simultaneous localization and mapping.

7. The method according to one of the preceding claims, after combining the image data and the lidar data and before determining the position of the container (24) depending on the combined data, the method comprising:
determining a map (60) of the container bay (22) from the combined data, wherein the map (60) comprises a digital representation of the area of the container bay (22), wherein the property of the container (24) is determined depending on the combined data by determining the property of the container (24) from the map (60).

8. The method according to one of the preceding claims, wherein
the property of the container (24) is at least one property out of a group of properties, the group of properties comprising a position of the container (24) on the container bay (22), a type of the container (24), a size of the container (24), and an orientation of the container (24).

9. The method according to one of the preceding claims, wherein
the camera and the lidar device (50) are arranged such that a camera field of view (42) of the camera (40) at least partly overlaps a lidar field of view (46) of the lidar device (50).

10. The method according to one of the preceding claims, wherein a further camera (44) and/or a further lidar device (54) are arranged at a structure of the crane (30), the method comprising:
receiving further image data from the further camera (44) and combining the further image data with the other image data; and/or
receiving further lidar data from the further lidar device (54) and combining the further lidar data with the other lidar data; and
determining the position of the container (24) depending on these combined data.

11. The method according to one of the preceding claims, wherein
the property is determined from the combined data by a machine learning algorithm.

12. A controller for determining at least one property of a container (24) on a container bay (22) of a container vessel (20), the controller comprising:
a memory configured for storing image data, lidar data, combined data, and/or position data being representative of a position of a camera (40) mounted on a structure of a crane (30) and/or of a position of a lidar device (50) mounted on a structure of a crane (30), wherein the structure of the crane (30) at least partly extends over the container bay (22); and
a processor which is configured for carrying out the method in accordance with one of the preceding claims.

13. A determination device (39) for determining at least one property of a container (24) on a container bay (22) of a container vessel (20), the determination device (39) comprising:
the controller in accordance with claim 12;
a camera (40) mounted on a structure of a crane (30), wherein the structure of the crane (30) at least partly extends over the container (24); and
a lidar device (50) mounted on a structure of a crane (30), wherein the structure of the crane (30) at least partly extends over the container (24).

14. The determination device (39) of claim 12, comprising:
a further camera (44) mounted on a structure of the crane (30); and/or
a further lidar device (54) mounted on a structure of the crane (30).

15. A computer program for determining at least one property of a container (24) on a container bay (22) of a container vessel (20), the computer program comprising computer-readable instructions which, when being executed by a processor of a controller according to claim 12, carry out the method in accordance with one of claims 1 to 11.
